# EUROPEAN PATENT SPECIFICATION

(11) **EP 3 462 096 B1**
(45) Date of publication and mention of the grant of the patent: **21.05.2025**
(21) Application number: 18197252.2
(22) Date of filing: 27.09.2018
(51) Int. Cl.: F24F 1/0003, G05B 19/00, G05B 21/00, F24F 11/62, F24F 11/58

(54) **CONTROL METHOD OF AIR CONDITIONER SYSTEM**
STEUERUNGSVERFAHREN FÜR EINE KLIMAANLAGE
PROCÉDÉ DE COMMANDE DE SYSTÈME DE CLIMATISATION

(30) Priority: 28.09.2017 KR 20170126495
(43) Date of publication of application: 03.04.2019
(73) Proprietor: LG Electronics Inc., Yeongdeungpo-gu Seoul 07336 (KR); Pusan National University Industry-University Cooperation Foundation, Busan 46241 (KR)
(72) Inventor: LEE, Hakrae, 08592 Seoul (KR); KIM, Jinho, 08592 Seoul (KR); PARK, Chulmin, 08592 Seoul (KR); EOM, Donggi, 08592 Seoul (KR); YOON, Seontae, 08592 Seoul (KR); LEE, Kyongdo, 08592 Seoul (KR); LEE, Kwonhyung, 08592 Seoul (KR); KIM, Sukchan, 48119 Pusan (KR)
(74) Representative: Vossius & Partner Patentanwälte Rechtsanwälte mbB

(56) References cited:
- EP-A1- 1 826 498
- EP-B1- 1 826 498
- CN-A- 104 896 658
- CN-A- 106 322 662
- CN-A- 107 135 546
- US-A1- 2015 305 040
- US-A1- 2016 154 413

## Description

### BACKGROUND OF THE INVENTION

### 1. Field of the invention

The present invention relates to an air conditioner system and a control method thereof and, more particularly, to an air conditioner system in which units are able to perform wireless communication with each other and a control method thereof.

### 2. Description of the Related Art

An air conditioner may provide a comfortable indoor environment to humans by discharging cold air to a room to adjust an indoor temperature and purify air of the room to create a pleasant indoor environment. The air conditioner may include an indoor unit including a heat exchanger and may be installed in a room. The air conditioner may also include an outdoor unit including a compressor, a heat exchanger, and the like, and the outdoor unit may supply a refrigerant to the indoor unit.

The air conditioner, in which the indoor unit including the heat exchanger and the outdoor unit including the compressor, the heat exchanger, and the like, are separately controlled, may be operated by controlling power supplied to the compressor or the heat exchanger. The outdoor unit and the indoor unit may be connected by a refrigerant pipe. Compressed refrigerant from the compressor of the outdoor unit may be supplied to the heat exchanger of the indoor unit through the refrigerant pipe. Heat-exchanged refrigerant in the indoor unit's heat exchanger may flow back into the outdoor unit's compressor through the refrigerant pipe. As a result, the indoor unit may discharge the cold or hot air into the room via the heat exchange using the refrigerant.

Air conditioners may be interconnected between buildings or interconnected in small groups. An air conditioner system may transmit and receive the data, and monitor a condition of the corresponding air conditioner based on the transmitted and received data.

Recently, more and more attempts are made for wireless communication between units, so there are increasing cases in which a wireless network is configured between not just units, such as an indoor unit, an outdoor unit, a controller, etc., but also other devices, such as a mobile terminal.

When it comes to devices connected via wireless communication, it is possible to check information of the devices and control the devices without being limited to where a user and the devices are located.

However, as the number of devices connected via wireless communication is increasing, communication quality may be degraded, such as reduction in communication speed and interference, unless optimal communication channel configuration is made.

Thus, there is need of a method of allowing wirelessly connected units to set an optimal communication channel and a method of changing a communication channel according to change in a communication environment while being in use.

EP 1 826 498 (A1) relates to a communications network for air-conditioning systems, comprising a plurality of fan coils which correspond to respective wireless nodes of the network, each of the fan coils being provided with a respective wireless communications means for bidirectional communication with the other fan coils of the network and being further provided with a memory which contains instructions for exchanging messages with the nodes of the network according to a mesh-type logic by way of the wireless communications means.

### SUMMARY OF THE INVENTION

The present invention provides an air conditioner system capable of changing to a good communication channel according to change of a communication environment, and a control method thereof.

The present invention provides an air conditioner system capable of setting an optimal wireless communication channel, and a control method thereof.

The present invention provides an air conditioner system capable of implementing a high-quality wireless communication environment, and a control method thereof.

The present invention provides an air conditioner system in which each unit is capable of wirelessly communicating with one another, regardless an installation environment, and a control method thereof.

The invention is specified by the independent claim. Preferred embodiments are defined by the dependent claims. In the present invention, the above and other objects can be accomplished by the provision of a control method of an air conditioner system which comprises one or more groups each comprising an outdoor unit and a plurality of indoor units, the method including: when a preset reception rate degradation error occurs in one or more indoor units among a plurality of indoor units belonging to a particular group, transmitting a channel switch request signal to an outdoor unit belonging to the particular group; transmitting, by the outdoor unit belonging to the particular group, a channel scan start command to the plurality of indoor units belonging to the particular group; performing a channel scan by each of the outdoor unit and the plurality of indoor units; transmitting, by the plurality of indoor units, channel scan results to the outdoor unit; determining, by the outdoor unit, a channel for use of the particular group based on a result of a channel scan performed by the outdoor unit and the channel scan results received from the plurality of indoor units; and outputting, by the outdoor unit, information on the determined channel to the plurality of indoor units. Accordingly, it is possible to change to a good communication channel according to change in a communication environment.

According to at least one embodiment of the present invention, it is possible to change to a good communication channel according to change in a communication environment.

In addition, according to at least one embodiment of the present invention, an optimal communication channel may be set.

In addition, according to at least one embodiment of the present invention, a high-quality wireless communication environment may be implemented.

In addition, according to at least one embodiment of the present invention, an air conditioner system in which each unit is enabled to wirelessly communicate with one another regardless of an installation environment, and a control method thereof may be provided.

Meanwhile, other effects may be explicitly or implicitly disclosed in the description of the embodiments of the present invention.

### BRIEF DESCRIPTION OF THE DRAWINGS

The embodiments will be described in detail with reference to the following drawings in which like reference numerals refer to like elements wherein:
FIG. 1 is a diagram schematically illustrating configuration in which an air conditioner system according to an embodiment of the present invention is installed in a building;
FIG. 2 is a diagram illustrating configuration of an air conditioner system according to an embodiment of the present invention;
FIG. 3 is a diagram for explaining communication in an air conditioner system according to an embodiment of the present invention;
FIG. 4 is a block diagram schematically illustrating control configuration of units in an air conditioner system according to an embodiment of the present invention;
FIG. 5 is an inner block diagram schematically illustrating a mobile terminal according to an embodiment of the present invention;
FIG. 6 is a diagram for explaining an air conditioner system according to an embodiment of the present invention;
FIG. 7 is a flowchart illustrating a control method of an outdoor unit according to an embodiment of the present invention;
FIG. 8 is a flowchart illustrating a method of controlling an indoor unit according to an embodiment of the present invention;
FIG.9 is a flowchart illustrating a control method of an air conditioner system according to an embodiment;
FIGS. 10, 11A, and 11B are diagram for explaining a control method of an air conditioner system according to an embodiment of the present invention; and
FIG. 12 is a flowchart illustrating a control method of an air conditioner system according to an embodiment of the present invention.

### DETAILED DESCRIPTION OF THE EMBODIMENTS

Hereinafter, embodiments of the present invention will be described in detail with reference to the accompanying drawings. While the invention will be described in conjunction with exemplary embodiments, it will be understood that the present description is not intended to limit the invention to the exemplary embodiments.

In the drawings, in order to clearly and briefly describe the invention, parts which are not related to the description will be omitted and, like reference numerals refer to like elements throughout.

In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other.

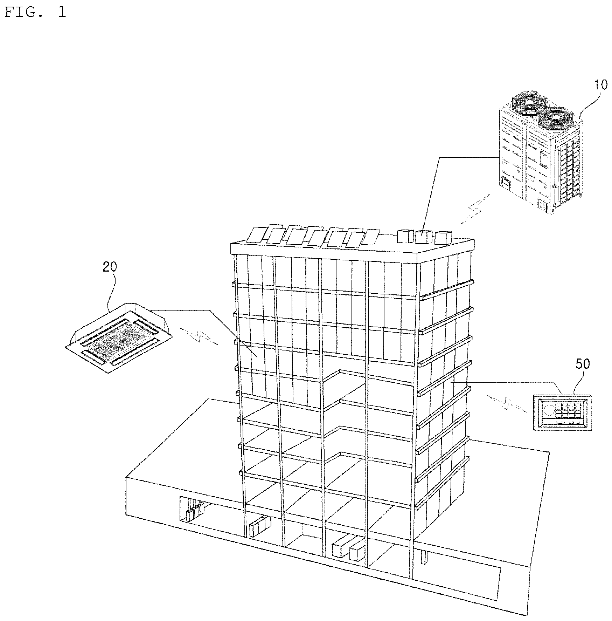

FIG. 1 is a diagram schematically illustrating configuration in which an air conditioner system according to an embodiment of the present invention is installed in a building.

Referring to FIG. 1, an air conditioner system may include an outdoor unit 10, an indoor unit 20, and a controller 50.

In addition to the indoor unit and the outdoor unit, the air conditioner system may include a ventilator, an air purifier, a humidifier, a heater, etc... and may further include other units, such as a chiller, an air conditioning unit, and a cooling tower, depending on a size of the air conditioner system. In addition, the air conditioner system may be operatively connected to a mobile device, a security device, an alarm device, etc. located in the building.

The controller 50 may control operation of the indoor unit 20 and the outdoor unit 10 in accordance with an input user command, periodically receive and store data on corresponding operation states of the indoor unit and the outdoor unit, and output the operation states through a monitor screen. The controller 50 may perform operation setting, lock setting, schedule control, group control, peak control regarding power consumption, demand control, etc. of the indoor unit 20.

The outdoor unit 10 is connected to the indoor unit 20 to supply refrigerant to the indoor unit 20. In addition, by periodically communicating with a plurality of indoor units 20, the outdoor unit 10 transmits and receives data with respect to the plurality of indoor units 20, and changes operation in accordance with an operating setting changed through an indoor unit.

The indoor unit 20 may include an electronic expansion valve (not shown) for expanding refrigerant supplied from the outdoor unit 10, an indoor heat exchanger (not shown) for heat-exchanging refrigerant, an indoor unit fan (not shown) for allowing indoor air to flow into the indoor heat exchanger and for allowing the heat-exchanged air to be exposed to the indoor, a plurality of sensors (not shown), and control means (not shown) for controlling the operation of the indoor unit.

The indoor unit 20 may include a discharge port (not shown) for discharging the heat-exchanged air. The discharge port is provided with a wind direction adjusting means (not shown) for closing the discharge port and controlling the direction of the discharged air. The indoor unit 20 may control the rotating speed of the indoor unit fan, thereby controlling the intake air and the air to be discharged and controlling the air flow rate. The indoor unit 20 may further include an output unit for displaying the operation state and setting information of the indoor unit, and an input unit for inputting the setting data. In this case, the indoor unit 20 may transmit setting information regarding air conditioner operation to a remote controller (not shown) connected thereto, output the information via the remote controller, and receive data.

The remote controller (not shown) is connected to the indoor unit via wired communication or wireless communication to input a user command to the indoor unit, receive data on the indoor unit, and output the received data. According to a method of connection with the indoor unit The remote controller may transmit a user command to the indoor unit and perform one-directional communication, in which data on the indoor unit is not received, or bidirectional communication, data is transmitted and received with respect to the indoor unit.

The outdoor unit 10 may operate in the cooling mode or the heating mode in response to data received from the indoor unit 20 connected thereto or a control command received from the controller, and supply refrigerant to the indoor unit connected thereto.

In the presence of a plurality of outdoor units, each outdoor unit may be connected to a plurality of indoor units, and supply refrigerant to a plurality of indoor units via a distributor.

The outdoor unit 10 may include at least one compressor for compressing the refrigerant and discharging the pressurized gas refrigerant, an accumulator that separates the gas refrigerant and the liquid refrigerant from the refrigerant to prevent the non-vaporized liquid refrigerant from entering the compressor, an oil collection unit for collecting oil from the refrigerant discharged from the compressor, an outdoor heat exchanger for condensing or evaporating the refrigerant via heat exchange with the outside air, an outdoor unit fan for introducing air into the outdoor heat exchanger in order to facilitate the heat exchange of the outdoor heat exchanger and for discharging the heat-exchanged air to the outside, a four-way valve that changes the refrigerant flow path according to an operation mode of the outdoor unit, at least one pressure sensor for measuring pressure, at least one temperature sensor for measuring temperature, and a control unit for controlling operation of the outdoor unit and performing communication with other units. The outdoor unit 10 may further include a plurality of sensors, valves, super-coolers, etc., but description thereof may be omitted below.

In addition, the air conditioner system may transmit and receive data with respect to another air conditioner via network connection such as the Internet. An air conditioner may access an external service center, a management server, a database, etc., via the controller, and may communicate with an external terminal accessing via a network. The terminal may access at least one unit in the air conditioner system, and monitor and control operation of the air conditioner system as a second controller.

In addition, the outdoor unit 10, the indoor unit 20, the controller 50, and the like may wirelessly communicate directly with each other by a predetermined wireless communication method, and the outdoor unit 10, the indoor unit 20, the controller 50, and the like may wirelessly communicate directly with a mobile terminal by the predetermined wireless communication method. As a result, a user is able to monitor a state of each unit conveniently using a mobile terminal, and control each unit.

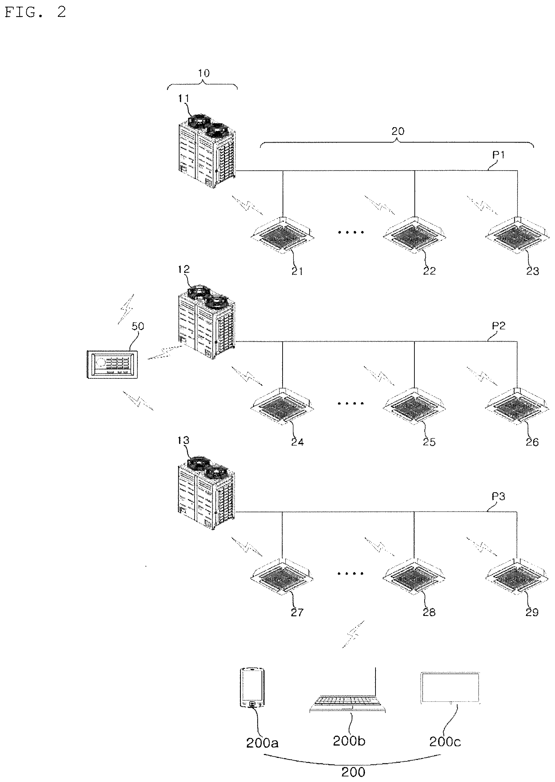

FIG. 2 is a diagram illustrating configuration of an air conditioner system according to an embodiment of the present invention.

Referring to FIG. 2, in the air conditioner according to an embodiment of the present invention, a plurality of indoor unit 20, a plurality of outdoor units 10, and a controller 50 transmit and receive data by a wireless communication method.

The outdoor units 10 may be connected to the plurality of indoor units 20 via refrigerant pipes P1, P2, and P3, and transmit and receive data with respect to the plurality of indoor units 20 by a wireless communication method.

By periodically communicating with the plurality of indoor units 20, the outdoor units 10 may transmit and receive data with respect to the indoor units 20 and change operation according to change of operation setting of the indoor units 20. The plurality of outdoor units 10 and the plurality of indoor units 20 may transmit and receive data by a wireless communication method.

The indoor units 20 may communicate not just with the outdoor units 10, but also with the controller 50 by a wireless communication method.

A first outdoor unit 11 is connected to first, second, and third indoor units 21, 22, and 23 via a first refrigerant pipe P1; a second outdoor unit 12 is connected to fourth, fifth, and sixth indoor units 24, 25, and 26 via a second refrigerant pipe P2; and a third outdoor unit 13 is connected to seventh, eighth, and ninth indoor units 27, 28, and 29 via a third refrigerant pipe P3. For convenience of explanation, each outdoor unit is described being connected to three indoor units, but it is merely exemplary and there is no limitation on the number or shape of indoor units.

Refrigerant is supplied to the first, second, and third indoor units 21, 22, and 23 from the first outdoor unit 11 upon operation of the first outdoor unit 11; refrigerant is supplied to the fourth, fifth, and sixth indoor units 24, 25, and 26 via the second refrigerant pipe P2 from the second outdoor unit 12 upon operation of the second outdoor unit 12; and refrigerant is supplied to the seventh, eighth, and ninth indoor units 27, 28, and 29 from the third outdoor unit 13 via the third refrigerant pipe P3 upon operation of the third outdoor unit 13.

Air conditioners may be grouped by an outdoor unit, and each group of air conditioners may communicate using a different channel. An indoor unit performs heat exchange using refrigerant supplied from an outdoor unit and discharges cold or hot air, and thus, the indoor unit and the outdoor units connected via a refrigerant pipe may be set as one group.

For example, the first outdoor unit 11 may form a first group with the first, second, and third indoor units 21, 22, and 23 connected thereto via the first refrigerant pipe P1; the second outdoor unit 12 may form a second group with the fourth, fifth, and sixth indoor units 24, 25, and 26 connected thereto via the second refrigerant pipe P2; and the third outdoor unit 13 may form a third group with the seventh, eighth, and ninth indoor units 27, 28, and 29 connected thereto via the third refrigerant pipe P3. An outdoor and a controller may form a group according to where they are installed. A state of connection via a refrigerant pipe may be distinguished based on whether there is a change in temperature of an indoor unit by supply of refrigerant from an outdoor when the outdoor unit and the indoor unit are operated.

The controller 50 may communicate with the indoor units 20 or the outdoor units 10, regardless of a group.

The controller 50 controls operation of the plurality of indoor units 20 and the plurality of outdoor units 10 In response to an input user command, periodically receive and store data on corresponding operation of the plurality of indoor units and the plurality of outdoor units, and outputs an operation state through a monitor screen.

The controller 50 may be connected to the plurality of indoor units 20 to perform operation setting, lock setting, schedule control, group control, peak control regarding power consumption, demand control, etc. In addition, by communicating with the outdoor units 10, the controller 50 controls the outdoor units 10 and monitors operation of the outdoor unit 10.

In the case where the controller 50 is implemented as a plurality of controllers, the plurality of controllers may transmit and receive data with each other through mutual wireless communication and may be connected to an external controller via a predetermined network.

When a controller and a plurality of units transmit and receive data by a wireless communication method, addresses necessary for the communication are stored in the controller and each unit. Each address may be allocated by an outdoor unit and the controller.

As described above, an outdoor may be grouped with indoor units connected thereto via a refrigerant pipe. In this case, addresses may be allocated to the outdoor unit and the indoor units belonging to the same group of the outdoor unit. In addition, even though a group is set with reference to an outdoor unit, communication is possible with every outdoor unit and every indoor unit. Accordingly, the controller may allocate addresses for central control in addition to addresses for communication on a group basis. In some cases, the controller may use the addresses allocated to an outdoor unit and indoor units as addresses for the central control, without allocating additional addresses.

Meanwhile, each unit of the air conditioner system, such as the outdoor units 10, the indoor units 20, and the controller 50, may wirelessly communicate with a mobile terminal 200.

Referring to FIG. 2, the air conditioner system according to an embodiment of the present invention may further include the mobile terminal 200 which is enabled to check a condition of an electronic device (unit), such as the outdoor units 10, the indoor units 20, and the controller 50, and a condition of an electronic device in the system.

The mobile terminal 200 may be provided with an application for controlling the air conditioner system, and check and control a state of the air conditioner system by executing the application.

The mobile terminal 200 may be, for example, a smart phone 200a embedded with an application for the air conditioner system, a laptop 200b, a tablet PC 200c, etc.

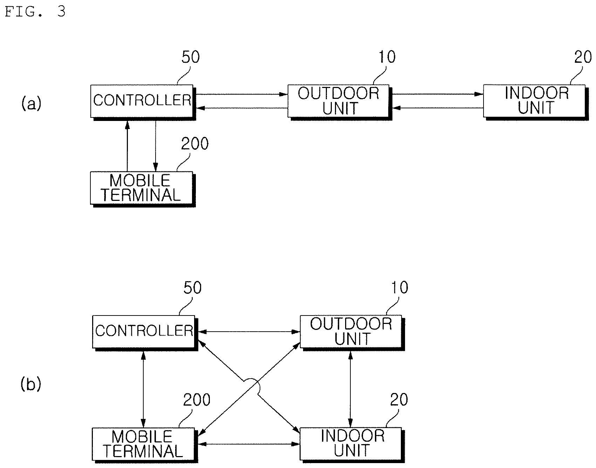

FIG. 3 is a diagram for explaining communication in an air conditioner system according to an embodiment of the present invention. FIG. 3(a) shows communication between units using wired communication, and FIG. 3(b) shows communication between units using wireless communication according to the present invention.

Referring to (a) of FIG. 3, a plurality of units in the air conditioner system is connected via communication lines. Since there is limitation in connection of the communication lines, the plurality of units is not connected one by one but is connected in phases according to a connected shape of connection lines.

A plurality of indoor units are connected to one outdoor unit via a communication line, and the outdoor unit is connected to the controller. When there is a plurality of outdoor units, the plurality of indoor units is connected to the plurality of outdoor units with reference to a connected state of a refrigerant pipe. The plurality of outdoor unit is connected to the controller.

An indoor units transmit data to an outdoor units, and the outdoor units transmits its own data and the data received from the indoor unit to the controller. The controller may check an operation state of the indoor unit based on data received from the outdoor units.

In the case where the controller transmits a control command to an indoor unit, the controller transmits the control command to an outdoor unit connected to the indoor unit and the outdoor unit transmits the received control command to the indoor unit.

As such, in the case of wired communication, a plurality of units is not connected one by one, so data is transmitted in phases according to a connection state of communication lines.

Accordingly, since data of an indoor unit is not able to be transmitted directly, there is time delay in transmission of the data. In addition, since an outdoor unit needs to process even data on another unit, load is increased. Furthermore, since one outdoor unit needs to process data on a plurality of indoor units, it takes long time to transmit data depending on the number of indoor units connected to the outdoor unit.

In addition, even when a state of units are monitored using the mobile terminal 200, data on an indoor unit is not able to be transmitted directly and thus the data may be transmitted and received via the controller 50 or the like. The mobile terminal 200 is not capable of freely communicating with each unit of the air conditioner system, and needs to receive, from a particular unit, only information on the particular unit and communicate with the controller 50 of an upper layer in order to obtain whole information.

As shown in (b) of FIG. 3, an outdoor unit 10, an indoor unit 20, a controller 50, and a mobile terminal 200 transmits and receives data with respect to each other by a wireless communication method.

The controller 50 and/or the mobile terminal 200 may request data from each of the outdoor unit 10 and the indoor unit 20, and may determine an operation state or abnormality of each unit based on data received from each of the outdoor unit 10 and the indoor unit 20.

In the above, grouping an outdoor unit and an indoor in consideration of a flow of refrigerant has been described, but a communication channel including the controller, the outdoor unit, and the indoor unit may be set separately from a communication channel between the outdoor unit and the indoor unit.

The controller 50 and/or the mobile terminal 200 may change operation setting of the indoor unit based on data received from the indoor unit 20 according to a condition (temperature or humidity) of an indoor space where the indoor unit 20 is installed, and transmits data dependent upon the change of the operation setting directly to the indoor unit. In this case, when the operation setting is changed, the indoor unit 20 transmits the corresponding data to the outdoor unit and accordingly operation of the outdoor unit 10 is changed as well.

When the indoor unit 20 is scheduled to operate at a preset time, the controller 50 may transmit an operation command to the indoor unit and the outdoor connected thereto, and the indoor unit may transmit a response to the operation command to the controller 50 and transmit data on an operation state thereof at a predetermined interval.

In response to data received through an input unit or data received from the controller 50, the indoor unit 20 sets operation and transmits data to the outdoor unit.

The outdoor unit 10 controls a compressor by calculating a load according to the data received from the indoor unit and an operation state of a plurality of indoor units.

The outdoor unit 10 and the indoor unit 20 may transmit data to the controller 50 at a predetermined time interval, and transmit error or abnormality-related data to the controller 50 in response to an occurrence of an error or an abnormality, regardless of a cycle.

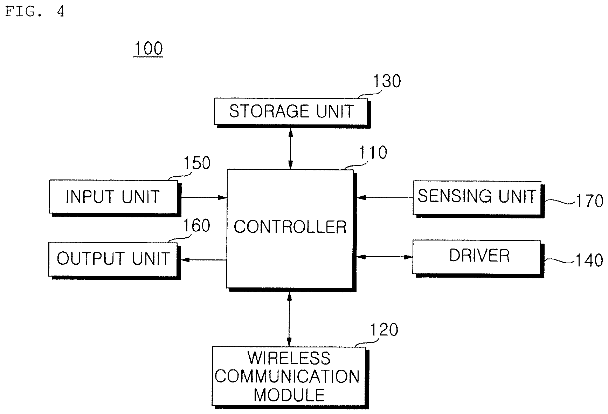

FIG. 4 is a block diagram schematically illustrating control configuration of units in an air conditioner system according to an embodiment of the present invention.

An electronic device according to an embodiment of the present invention may be a unit 100 in an air conditioner system. For example, an electronic device according to an embodiment may be one of an indoor unit, an outdoor unit, a controller, and a wireless sensor in an air conditioner system.

Referring to FIG. 4, the unit 100 in the air conditioner system may include a driver 140, a sensing unit 170, an output unit 160, an input unit 150, a storage unit 130, and a controller 110 for controlling overall operation.

In addition, the unit 100 may be provided with a wireless communication module 120 or may be connected to the wireless communication module 120. The wireless communication module 120 may be embedded in a unit or installed outside the unit.

These are common components included in every unit 100, and an additional component may be added depending on characteristics of a product.

For example, the outdoor unit 10 includes a compressor, an outdoor unit fan, and a plurality of valves. Accordingly, drivers of the outdoor unit may be classified into a compressor driver, an outdoor unit fan driver, and a vale controller.

The indoor unit 20 is provided with a louver or a vane as a wind direction adjusting means, and may be provided with an indoor unit fan driver, a valve controller, and a wind direction controller as the indoor unit 20 includes an indoor fan and a plurality of valves.

In addition, the type, the number, and the installation positions of sensors included in the sensing unit 170 may vary depending on a type of a unit.

The storage unit 130 stores control data for controlling operation of the unit 100, communication data for setting an address necessary to communicate with another unit or setting a group, data transmitted and received with respect to the outside, and operation data generated or sensed during operation. The storage unit 130 stores an execution program of each function of the unit, data for operation control, and transmitted and received data.

The storage unit 130 may be implemented in a hardware manner, as a variety of storage devices such as ROM, RAM, EPROM, flash drive, hard drive, and the like.

The input unit 150 includes at least one input means, such as a button, a switch, and a touch input means. When a user command or predetermined data is input in response to manipulation of an input means, the input unit 150 transmits the input data to the controller 110. The outdoor unit may be provided with a test run key and an address setting key, and the indoor unit may be provided with a power key, a menu input key, an operation setting key, a temperature adjusting key, a wind power key, a lock key, etc.

The output unit 160 may include at least one of a lamp which is controlled to be turned on or blink, an audio output unit provided with a speaker for outputting predetermined sound, or a display so as to output an operation state of the unit. The lamp notifies whether the unit is in operation, depending on whether the lamp is turned on, which color the lamp is turned on, whether the lamp is blinking, and the speaker output an operation state by outputting predetermined alarming sound or effect sound. The display may output a menu screen for controlling the unit, and output a guidance message or an alarm related to operation setting or an operation state of the unit, wherein the guidance message or the alarm is composed of a combination of at least one of a text, a number, or an image.

The sensing unit 170 may include a plurality of sensors. The sensing unit 170 may include a pressure sensor, a temperature sensor, a gas sensor, a humidity sensor, and a flow sensor.

For example, a plurality of temperature sensor is provided to sense indoor temperature, outdoor temperature, temperature of an indoor heat-exchanger, temperature of an outdoor heat-exchanger, and pipe temperature, and to input sensed values to the controller 110. The pressure sensor is installed at an inlet port and an outlet port of a refrigerant pipe, measure pressure of flowing refrigerant and pressure of discharged refrigerant, and input measurements to the controller 110. The pressure sensor may be installed not just in the refrigerant pipe, but also in a water pipe.

The driver 140 supplies operation power to a control target in accordance with a control command of the controller 110, and controls driving of the control target. As described above, in the case of an outdoor unit, the driver 140 may be provided as a compressor driver, an outdoor unit fan driver, and a value controller for controlling a compressor, an outdoor fan, and a vale, respectively. The driver 140 may apply operation power to motors provided in the compressor, the outdoor unit fan, the value, etc. so that preset operations are performed upon operation of the motors.

The wireless communication module 120 supports at least one or more wireless communication methods, and communicate with another unit in accordance with a control command of the controller 110. The wireless communication module 120 may transmit and receive data in a wireless communication method set between the controller, the outdoor unit, and the indoor unit, and transmit received data to the controller.

The wireless communication module 120 sets an address for communication between units, transforms data to be transmitted and received, and processes a signal. Upon operation of the unit, the wireless communication module 120 searches for a unit in the same frequency band through wireless communication, and checks connection to the unit. The wireless communication module 120 performs communication by allocating a temporary address for an initial operation or setting a received temporary address. In addition, when setting an address in response to a control command of the controller, the wireless communication module 120 may request a product number from the controller and set an address based on the product number. The product number may be a unique number, a serial number, a Media Access Control (MAC) address, or the like of the unit.

The controller 110 controls data to be input and output trough the input unit 150 and the output unit 160, manages data stored in the storage unit 130, and controls transmitting and receiving data through the wireless communication module 120. The controller 110 senses a connection state and a communication state of the wireless communication module 120 through a connection unit (not shown), and determines an error.

The controller 110 generates a control command to operate in accordance with a request from another unit or a set operation setting, and transmits the control command to the driver 140. Accordingly, the driver 140 may control a component connected thereto, for example, a compressor, an output unit fan, a value, an indoor fan, a wind direction adjusting means, etc. to operate.

In addition, while a unit is in operation, the controller 110 determines an operation state of the unit based on data received from a plurality of sensors of the sensing unit 170, and outputs an error.

The wireless communication module 120 may be provided inside the unit 100 or may be connected to the unit 100 via a connection unit (not shown). The wireless communication module 120 receives data of the unit via the connection unit, and transmits received data to the unit.

The wireless communication module 120 may perform wireless communication using a sub-GHz frequency band so that communication is enabled despite the presence of a wall, a floor, an obstacle, etc. in a building. The sub-GHz frequency band has excellent transmission and rotation characteristics, and thus is less attenuated in response to a wall or an inter-floor object. Thus, the wireless communication module 120 is efficient to be used for communication within an air conditioner system provided with a plurality of units in a building partitioned by walls.

The wireless communication module 120 performs communication using one of 400MHz and 900MHz which are unlicensed bands available for a lower power wireless station in Sub-GHz bands. The wireless communication module 120 may selectively use 400MHz and 900MHz in response to a standard which is different depending on a region or country.

In addition, the wireless communication module 120 may further include a Zigbee module, a Bluetooth module, an NFC module, and any other communication module which is a short-range communication technology.

The wireless communication module 120 includes a plurality of communication modules, so the same communication module or different communication modules may be used for communication between an outdoor unit and another indoor unit, communication with a remote controller, and communication with the controller. The wireless communication module 120 may perform communication by a different communication method according to a target to communicate, by selectively changing the communication method in response to the target to communicate.

When different channels are used for communication with an indoor unit and communication with a controller, the wireless communication module 120 may transmit and receive data by setting a different channel according to a target to communicate.

According to the Korean radio wave act, over a frequency band of 400MHz or 900MHx, there are 21 channels between 424.7MHz and 424.95MHz and 11 channels between 447.8625MHz and 447.9875MHz for radio equipment of a predetermined low-power wireless station used for data transmission, and 32 channels between 917MHz and 923.5MHz for radio equipment of RFID/USN. Thus, communication may be performed using the above channels.

Unlicensed frequency bands used in countries are as below: 902-928MHz (FCC Part 15.247) in North and South America; 433MHz, 915MHz, and 863-868MHz(ETSIEN300220) in Europe; 920- 928MHz(ARIB STD-T108) in Japan; 920MHz in China; 424- 447MHz and 917-923.5MHz(KC) in South Korea; 865- 867MHz(G.S.R 564(E)) in India; 433MHZ and 915MHZ in Australia; and 433MHz in South Africa. Across the world, 2.4GHz and 5.72GHz are commonly available.

In addition, if 902-928 MHz is used in the North and South America, 863-868MHz in Europe, 920-928MHz in Japan, 917 to 923.5MHz in South Korea, 865-867 MHz in India, and 2.74GHz/5.72GHz commonly across the word, communication may be possible at 50kbps or faster.

Since an obstacle such as a wall between floors and furniture exists in a building, it is necessary to use a frequency band which allows a signal to pass through such an obstacle and reach a predetermined distance or more.

The Industrial, Scientific and Medical (ISM) band (100MHz, 20MHz, 400MHz, 900MHz) in Sub-GHz bands has an excellent feature of penetrating in a building and thus enables inter-floor communication. A length of an antenna depends on a transmitting frequency band, and, since 100MHz and 200MHz requires a long antenna length, there is restriction to install an antenna.

Therefore, it is desirable for the wireless communication module 120 to perform communication using a frequency band of 400MHz or 900MHz out of the aforementioned frequency bands

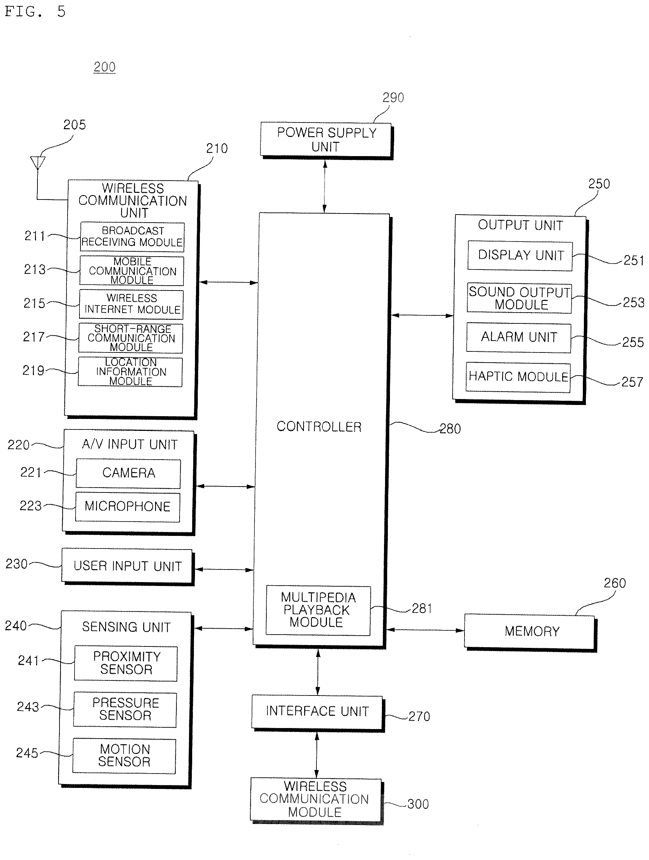

FIG. 5 is an inner block diagram schematically illustrating a mobile terminal according to an embodiment of the present invention.

Referring to FIG. 5, a mobile terminal 200 may include a wireless communication unit 210, an Audio/video (A/V) input unit 220, a user input unit 230, a sensing unit 240, an output unit 250, a memory 260, an interface unit 270, a controller 280, and a power supply unit 290.

The mobile terminal 200 according to one aspect of the present invention may include a wireless communication module 300 wirelessly communicating with a plurality of electronic devices.

The wireless communication module 300 may be configured as one block of the wireless communication unit 210.

In the case of wirelessly communicating with each unit 100 included in the air conditioner system using a sub-GHz band, the wireless communication module 300 supporting wireless communication in a sub-GHz band may be used. Not all the common mobile terminals 200 are embedded with the wireless communication module 300 supporting sub-GHz band wireless communication, so it is desirable to use a dedicated wireless communication module 300 for connection.

In this case, the wireless communication unit 300 may be connected via the interface unit 270 or via the wireless communication unit 210.

Meanwhile, the wireless communication unit 210 may include a broadcast receiving module 211, a mobile communication module 213, a wireless internet module 215, a short-range communication module 217, and a location information module(ex) a Global Position System (GPS) module) 219.

The broadcast receiving module 211 may receive at least one of a broadcast signal or broadcast-related information from an external broadcast management server via a broadcast channel. The broadcast channel may include a satellite channel, a terrestrial channel, etc.

The broadcast signal and/or the broadcast-related information received through the broadcast receiving module 211 may be stored in the memory 260.

The mobile communication module 213 transmits and receive a radio signal with respect to at least one of a base station, an external terminal, or a server on a mobile communication network. The radio signal may include a voice call signal, a video call signal, or various types of data according to transmission and reception of text/multimedia message.

The wireless internet module 215 refers to a module for wireless Internet access. The wireless internet module 215 may be embedded in or external to the mobile terminal 200. For example, the wireless internet module 215 may perform Wi-Fi-based wireless communication or Wi-Fi Direct-based wireless communication.

The short-range communication module 217 refers to a module for local area communication, and may support short-range communication using at least one of the following: Bluetooth^{™}, Radio Frequency Identification (RFID), Infrared Data Association (IrDA), Ultra Wideband (UWB), and ZigBee.

The short-range communication module 217 may support wireless communication between the mobile terminal 200 and a wireless communication system, wireless communication between the mobile terminal 200 and another mobile terminal 200, wireless communication between the mobile terminal and a different mobile terminal, or wireless communication between the mobile terminal 200 and a network in which an external server is located via short-range wireless area networks.

The GPS module 219 may receive position information from a plurality of GPS satellites.

Meanwhile, the wireless communication unit 210 may exchange data with a server using one or more communication modules.

The wireless communication unit 210 may include an antenna 205 for wireless communication, and may include an antenna for receiving a broadcast signal in addition to an antenna for making a call.

The A/V input unit 220 is related to an audio signal or a video signal, and may include a camera 221 and a microphone 223.

The user input unit 230 generates key input data that is input by a user to control operation of the terminal. To this end, the user input unit 230 may be in the form of a key pad, a dome switch, a touch pad (static pressure/electrostatic), or the like. In particular, if a touch pad forms an inter-layered structure with a display unit 251, the structure may refer to a touch screen.

The sensing unit 240 may generate a sensing signal for controlling operation of the mobile terminal 200, by sensing the current state of the mobile terminal 200, for example, an opened/closed state of the mobile terminal 200, a position of the mobile terminal 200, and the presence of the user's contact.

The sensing unit 240 may include a proximity sensor 241, a pressure sensor 243, a motion sensor 245, etc. The motion sensor 245 may sense movement or a position of the mobile terminal 200 using an accelerometer, a gyro sensor, a gravity sensor, and the like. In particular, the gyro sensor is a sensor for measuring an angular velocity, which is able to sense a direction (an angle) of rotation against a reference direction.

The output unit 250 may include the display unit 251, a sound output module 253, an alarm unit 255, a haptic module 257, etc.

The display unit 251 displays information processed in the mobile terminal 200.

Meanwhile, when the display unit 251 forms an inter-layered structure with the touch pad to implement a touch screen, the display unit 251 may be used not just as an output device but also as an input device to which information is allowed to be input by a user's touch.

The sound output module 253 outputs audio data received from the wireless communication unit 210 or stored in the memory 260. The sound output module 253 may include a speaker, a buzzer, etc.

The alarm unit 255 outputs a signal for notifying occurrence of an event in the mobile terminal 200. For example, the alarm unit 255 may output a signal in the form of vibration.

The haptic module 257 generates various tactile effects that a user can feel. The typical example of a tactile effect generated by the haptic module 257 may be vibration effect.

The memory 260 may store a program for processing and controlling of the controller 280 or may temporarily store input and output data (e.g., a phone book, messages, still images, videos, etc.).

The interface unit 270 may plays a role as a channel with all external devices connected to the mobile terminal 200. The interface unit 270 receives data or power from an external device and transfers the received data or power to each element of the mobile terminal 200 or allow internal data of the mobile terminal 200 to be transmitted to an external device.

The controller 280 generally controls overall operation of the mobile terminal 200 by controlling operation of each of the aforementioned elements. For example, the controller 280 may perform control or processing related to a voice call, data communication, a video call, and the like. In addition, the controller 280 may be provided with a multimedia playback module 281 for playing multimedia. The multimedia playback module 281 may be implemented in a hardware form inside the controller 280, or may be implemented in a software form separately from the controller 280.

The power supply unit 290 receives external and internal power under a control of the central controller 280 and supplies power necessary for operating each element.

Meanwhile, the mobile terminal 200 shown in FIG. 5 is a block diagram illustrating an embodiment of the present invention. Depending on specifications of the mobile terminal 200 in actual implementation, each constituent element in the block diagram may be combined or omitted or a new element may be added.

That is, two or more components may be combined into one element or one component may be divided into two or more components, as needed. In addition, the function of each block is described for the purpose of describing the embodiment of the present invention and thus specific operations or devices should not be construed as limiting the scope of the present invention which is defined in the claims.

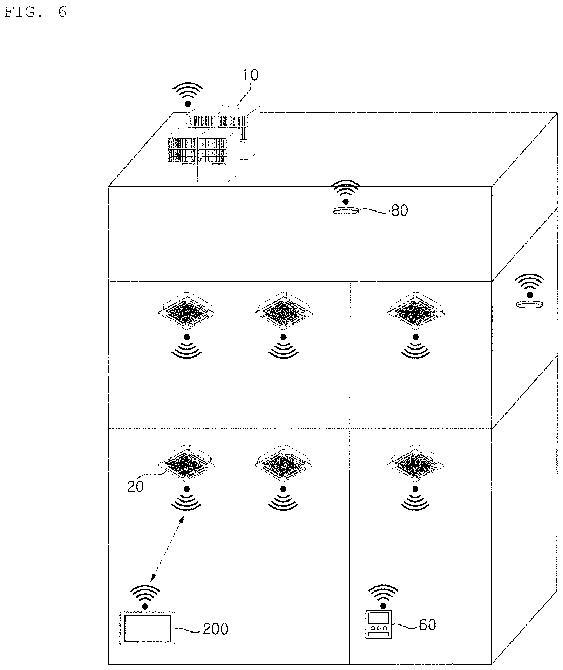

FIG. 6 is a diagram for explaining an air conditioner system according to an embodiment of the present invention.

Referring to FIG. 6, the air conditioner system according to the present invention may include an indoor unit 20, an outdoor unit 10, a remote controller 60, a wireless sensor 80, and a mobile terminal 200.

In addition the air conditioner system may further include a controller, a ventilator, a defrost, a humidifier, a heater, or the like.

The remote controller 60 may be connected to the indoor unit 20 or the outdoor unit 10 in a wired manner, and, more preferably, the remote controller 60 may communicate with the indoor unit 20 or the outdoor unit 10 in a wireless manner.

As described above with reference to FIGS. 1 to 5, the mobile terminal 200 and the controller 50 (see FIG. 1) may be wirelessly connected to units, such as the indoor unit 20 and the outdoor unit 10, controls each of the units.

In response to a request for data information from the mobile terminal 200 or the controller 50, the indoor unit 20 and the outdoor unit 10 may transmit the requested data information. Depending on content of a request from the mobile terminal 200 or the controller 50, the indoor unit 20 and the outdoor unit 10 may transmit data information with different content.

The indoor unit 20 and the outdoor unit 10 receives a control signal from the mobile terminal 200 and the controller 50. When receiving a control signal from the mobile terminal 200 or the controller 50, the indoor unit 20 and the outdoor unit 10 may report reception of the control signal to the mobile terminal 200 or the controller 50, but aspects of the present invention are not limited thereto and the above process may vary depending on a communication method adapted by the air conditioner system.

When receiving a control signal, the indoor unit 20 and the outdoor unit 10 may perform an operation corresponding to the control signal. The indoor unit 20 and the outdoor unit 10 may receive, from the mobile terminal 200 or the controller 50, a storage cycle or a storage time for storing a data signal including an operation state. The indoor unit 20 and the outdoor unit 10 may store data information periodically or in response to occurrence of an error.

When an error occurs, the indoor unit 20 and the outdoor unit 10 may extend a storage time of the recently stored data information. Each of the indoor unit 20 and the outdoor unit 10 may include a storage medium for storing the data information. For example, the indoor unit 20 and the outdoor unit 10 may periodically receive data information and may store, in response to occurrence of an error, the recently stored data information distinguishably from other information, but aspects of the present invention are not limited thereto.

Data information may include an operation state of the indoor unit 20 or the outdoor unit 10. For example, the data information may include air temperature, compression temperature, evaporation temperature, discharge temperature, heat-exchanger temperature, etc., but aspects of the present invention are not limited thereto and the data information may include a broad range of information related to operation of the indoor unit 20 or the outdoor unit 10.

The indoor unit 20 or the outdoor unit 10 may transmit data information including an operation state to the mobile terminal 200 or the controller 50. When an on/off state or an operation state of the indoor unit 20 or the outdoor unit 10 is changed or when an error occurs, the indoor unit 20 or the outdoor unit 10 may transmit corresponding data information to the mobile terminal 200 or the controller 50. The indoor unit 20 or the outdoor unit 10 may communicate with the mobile terminal 200 or the controller 50 in a predetermined period of in response to occurrence of an event.

The mobile terminal 200 or the controller 50 may receive in real time detailed cycle data, which allows error analysis of each unit, and displays the received data on a screen.

In the case where the mobile terminal 200 or the controller 50 displays data information in a test form such as numbers, data information of the indoor unit 20, data information of the outdoor unit 10, and valve information of a pipe connecting the indoor unit 20 and the outdoor unit 10 may be displayed.

In some implementations, when displaying the valve information, the mobile terminal 200 or the controller 50 may display opening or closing of a valve in the form of color or picture. For example, the mobile terminal 200 or the controller 50 may display a opened valve in blue and a closed valve in gray or may display a picture of an opened valve and a picture of a closed valve, but aspects of the present invention are not limited to the aforementioned color or types of pictures.

In the case of displaying data information in the form of a time series image, the mobile terminal 200 or the controller 50 may select an outdoor unit 10 or an indoor unit 20 to display.

In the case of selecting one outdoor unit 10 from among a plurality of outdoor units 10, the mobile terminal 200 or the controller 50 may select an indoor unit 20 to check, from among a plurality of indoor units 20 connected to the selected outdoor unit 10.

When the outdoor unit 10 and the indoor unit 20 are selected, the mobile terminal 200 or the controller 50 may receive data information, which includes an operation state of the selected indoor unit 20 and a connection state between the selected outdoor unit 10 and the selected indoor unit 20. The connection state may include a connection state of a pipe, a flow inside the pipe, an on/off state of the valve, etc., but aspects of the present invention are not limited thereto.

The mobile terminal 200 or the controller 50 may display an operation state of the selected outdoor unit 10 and the selected indoor unit 20 in a time-series manner in the form of change of a picture or change of color. The mobile terminal 200 or the controller 50 may display a state of a pipe connecting the selected outdoor unit 10 and the selected indoor unit 20, and a state of a value.

The mobile terminal 200 or the controller 50 may check in real time an operation state of the indoor unit 20 or the outdoor unit 10. When checking the operation state of the indoor unit 20 or the outdoor unit 10 in real time, the mobile terminal 200 or the controller 50 may receive data information in real time and display received data information.

The wireless sensor 80 senses an air condition, and transmit air condition data corresponding to the sensed air condition.

The air condition may be a concept including at least one of temperature, humidity, pressure, an amounts of dust, an amount of carbon dioxide, or an amount of oxygen. Accordingly, the wireless sensor 80 may measure at least one of temperature, humidity, pressure, an amount of dust, an amount of carbon dioxide, or an amount of oxygen.

The air condition data may include data on at least one of temperature, humidity, pressure, an amount of dust, an amount of carbon dioxide, or an amount of oxygen.

The wireless sensor 80 may transmit the air condition data in a broadcast manner. The broadcast manner may be a method of transmitting data without specifying a recipient. By transmitting air condition data to a predetermined communication network without specifying a recipient, the wireless sensor 80 may save energy, operations, and components necessary to set a recipient of the data.

The air condition data broadcasted by the wireless sensor 80 may be transferred to the outdoor unit 10 or the indoor unit 20.

In addition, the air condition data broadcasted by the wireless sensor 80 may be transferred to the controller 50 or the mobile terminal 200.

The indoor unit 20 or the outdoor unit 10 may perform an appropriate air conditioning operation based on the received air condition data.

The indoor unit 20 or the outdoor unit 10 may operate in accordance with a control signal received from the controller 50 or the mobile terminal 200.

As shown in FIG. 6, when units are wirelessly connected in the air conditioner system, installation costs and time may be remarkably reduced, compared to when the units are connected in a wired manner.

In addition, it is possible to check information of any one unit and control the corresponding unit by communicating directly the corresponding unit to control without passing through a particular unit, such as the controller 50. As a result, it is advantageous in terms of communication time and convenience of use.

For some cases, such as a building and apartment where many units are wirelessly connected, it is possible to check and control information.

However, due to the increasing number of wirelessly connected units, unless an optimal communication channel is not configured, communication quality may be degraded, thereby leading to reduction in a communication speed and occurrence of interference.

In addition, according to change in a communication environment, such as an increased number of devices using wireless communication, a degradation of quality of communication, such as, reduction in speed of communication and interference, even in a communication channel which was smooth when it was set in the beginning.

Thus, there is need of a method of allowing wirelessly connected units to automatically set the optimal communication channel, and a method of dynamically changing a communication channel while in use.

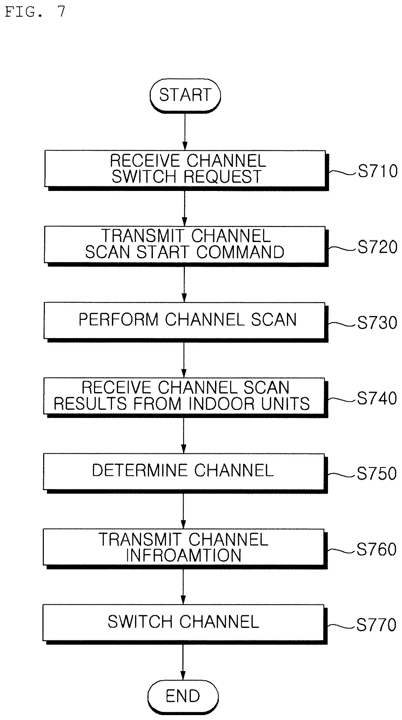

FIG. 7 is a flowchart illustrating a control method of an outdoor unit according to an embodiment of the present invention.

Referring to FIG 7, the outdoor unit 10 (see FIG. 1) according to an embodiment of the present invention may receive a channel switch signal from one of the plurality of indoor units 20 (see FIG. 1) in S710.

The outdoor unit 10 may be grouped with a plurality of indoor units 20, and the outdoor unit 10 and the plurality of indoor units 20 in the same group may periodically exchange a signal with each other periodically or in response to occurrence of an event. In addition, the outdoor unit 10 and the plurality of the indoor units 20 in the same group may be controlled as a group .

The outdoor unit 10 and the plurality of indoor units 20 may perform wireless communication using a sub-GHz frequency band.

Each wireless communication module 120 of the outdoor unit 10 and the plurality of indoor units 20 may wirelessly communicate with another unit using a sub-GHZ frequency band under the control of the controller 110.

The sub-GHz frequency band has excellent transmission and rotation characteristics and thus is less attenuated due to the presence of a wall or an inter-floor obstacle. Therefore, the sub-GHz frequency band is effected to be used for the purpose of communication of the air conditioner system in which a plurality of units are positioned in multiple floors in a building partitioned by walls.

Meanwhile, while the outdoor unit 10 and the plurality of indoor units 20 are in operation, a reception rate may be reduced due to an increased number of devices using wireless communication in an environment where each unit is installed, increased communication load, and addition of a wall or any other obstacle.

If a preset reception rate degradation error occurs, a plurality of indoor units 20 belonging to a particular group may transmit a channel switch request signal to an outdoor unit 10 belonging to the same group.

For example, the preset reception rate degradation error may include a buffer overflow occurring three times or more within the recent one hour, a checksum error occurring at 10% or more within the recent one hour, etc.

If another device using the same communication channel or an adjacent communication channel is additionally installed within a predetermined range from the position of the indoor unit 20 or if a data throughput of another device using the same communication channel or an adjacent communication channel is remarkably increased, an amount of data to be received by the indoor unit is increased.

If the amount of data is increased more than a predetermined level, the corresponding indoor unit 20 may not able to process received data and thus a buffer overflow may occur.

Thus, if a buffer overflow occurs a predetermined number of times or more within a predetermined period of time, a reception rate degradation error is determined to occur.

Using a checksum is widely known as a method of detecting an error from packet data transmitted and received in a wireless communication environment.

Thus, if a checksum error occurs at a predetermined level or more within a predetermined period of time, it is determined that a reception rate degradation error has occurred.

In a similar manner, a reception rate degradation error may be determined to be a Cyclic Redundancy Check (CRC) error.

Meanwhile, for dynamic channel switch, the outdoor unit 10 may transmit a channel scan start command to the plurality of indoor units 20 belonging to the same group in S720.

In addition, the outdoor unit 10 may perform a channel scan to check whether a channel is being used and to measure communication load in S730.

The channel scan may be performed on a plurality of channels which are set in a predetermined range of frequencies in a sub-GHz band. For example, the channel scan may be performed on 20 channels which are preset in a sub-GHz band.

For wireless communications, a variety of modification methods such as FSK, GFSK, OQPSK, PSK, and OFDM may be used. If a channel scan is performed using every modification method, a channel scan time may be dramatically increased in proportion to the number of channels and the number of modification method in use.

Thus, preferably, the air conditioner 10 may check an amount of communication load of a plurality of channels in an energy detection method, thereby reducing a channel scan time.

The outdoor unit 10 may scan all preset channels, and, depending on whether energy is detected in a channel during the scanning, determine whether the corresponding channel is being used.

In some implementations, when energy equal to or greater than a predetermined value is detected, the outdoor unit 10 may determine that a corresponding channel is being used.

Meanwhile, the outdoor unit 10 may repeatedly scan all preset channels a predetermined number of times, and decide an amount of communication load based on energy detected through the repeated scanning.

In some implementations, the outdoor unit 10 may decide an amount of communication load based on the size of detected energy.

According to an embodiment of the present invention, a channel use amount may be decided, not by checking the channel use amount on the basis of each channel x each modulation method, but by checking the channel use amount on the basis of channel idleness regardless of a type of wireless modulation method. For example, it is possible to measure communication load in an energy detection method for a predetermined period of time, regardless of a modulation method, and to automatically set a communication channel when a channel for use is determined.

In addition, according to an embodiment of the present invention, by performing wireless channel scan on sub-GHz band wireless communication, it is possible to check an amount of communication load and use of each channel.

Meanwhile, the outdoor unit 10 may receive channel scan results from a plurality of indoor units 20 belonging to the same group in S740.

The plurality of indoor units 20 belonging to the same group which has received a channel scan start command from the outdoor unit 10 may perform channel scan in the same way, as does the outdoor unit 10, and transmit channel scan results to the outdoor unit 10.

Based on a result of a channel scan performed on its own and the channel scan results received from the plurality of indoor units 20, the outdoor unit 10 may determine a channel for use of the corresponding group in S750.

The plurality of indoor units 20 may be disposed in different layers and in different spaces. Thus, communication environment may vary depending on positions of the plurality of indoor units 20.

According to the present invention, a channel for use may be determined, not on the basis of a result of a channel scan performed by a predetermined device alone, but on the basis of aggregated results of channel scans performed by the outdoor unit 10 and the plurality of indoor units 20a, individually.

According to the present invention, a channel scan may be performed by all units belonging to a group, and the outdoor unit 10 may aggregate results of channel scans received from all units of a group.

The outdoor unit 10 may analyze channel difference at each position by aggregating channel scan results, and determine that a channel not being used or having the smallest amount of communication load is a channel for use.

The outdoor unit 10 may use the highest load occupancy rate of each channel in the channel scan results of the outdoor unit 10 and the plurality of indoor units 20 as a representative load occupancy rate of a corresponding channel. That is, the worst result in results of all units may be used as a representative value of a use amount of each channel.

Meanwhile, if there is only one channel whose load occupancy rate is 0%, the outdoor unit 10 may determine that the channel whose load occupancy rate is 0% is a channel for use.

If there is a plurality of channels having a load occupancy rate of 0%, the outdoor unit 10 may determine that a channel with an adjacent channel having the lowest load occupancy rate among the plurality of channels having the load occupancy rate of 0% is a channel for use.

In addition, if there is a plurality of channels having a load occupancy rate of 0%, the outdoor unit 10 determines that a channel with the greatest difference in a load occupancy rate from an adjacent channel from among the plurality of channels having the load occupancy rate of 0% is a channel for use.

Interference may occur between channels and adjacent channels thereof. Thus, if there is a plurality of channels having a load occupancy rate of 0%, it is desirable to use a channel with an adjacent channel having a low load occupancy rate in order to minimize the interference.

If there is no channel having a load occupancy rate of 0%, the outdoor unit 10 may determine that a channel having the lowest load occupancy rate is a channel for use. That is, the outdoor unit 10 may use a channel which currently has the lowest communication load.

Alternatively, if there is no channel having the load occupancy rate of 0%, the outdoor unit 10 may determine that a channel having the lowest load occupancy rate due to other device not included in an air conditioner system is a channel for use.

Communication load between units included in the air conditioner system is easy to expect and manage, compared to communication load between units over different wireless communication (heterogeneous network).

Thus, if there is no channel having a load occupancy rate of 0%, a channel having the lowest load occupancy rate by a heterogeneous network may be determined to be a channel for use.

Meanwhile, even in the case where there is no channel having a load occupancy rate of 0%, the outdoor unit 10 may determine that a channel whose adjacent channel has the lowest load occupancy rate is a channel for use.

If there is a plurality of channels with respective adjacent channels having the lowest load occupancy rate, the outdoor unit 10 may determine that a channel having the greatest absolute value of signal strength is a channel for use.

In addition, even in the case where there is no channel having the load occupancy rate of 0%, the outdoor unit 10 may determine that a channel with the greatest difference in a load occupancy rate from an adjacent channel is a channel for use.

Meanwhile, the outdoor unit 10 may output information on the determined channel to the plurality of indoor units 20 in S760.

In this case, the information on the determined channel may include a command that instructs setting (switching to) the determined channel as a communication channel.

The wireless communication module 120 of the outdoor unit 10 may broadcast a signal including the information on the determined channel a predetermined number of times, and the respective wireless communication modules 120 of the plurality of indoor units 20 may receive the broadcasted signal.

Meanwhile, the outdoor unit 10 may switch to the determined channel as a communication channel in S770.

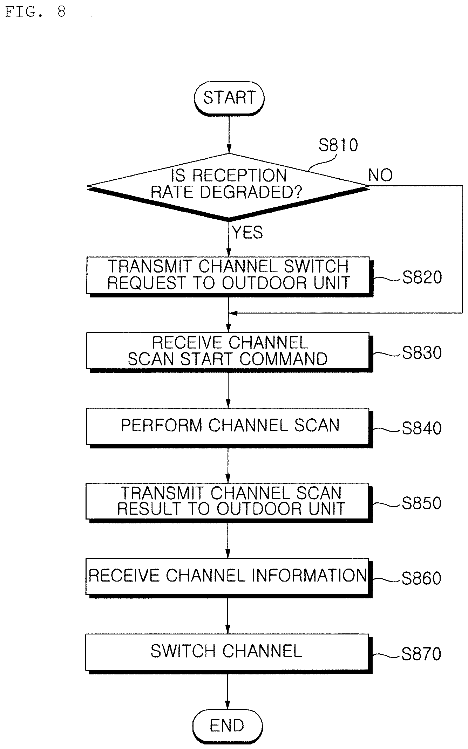

FIG. 8 is a flowchart illustrating a method of controlling an indoor unit according to an embodiment of the present invention.

Referring to FIG. 8, if a preset reception rate degradation error occurs in S810, the indoor unit 20 (see FIG. 1) according to the present invention transmits a channel switch request signal to the outdoor unit 10 belonging to the same group in S820.

For example, the preset reception rate degradation error may include a buffer overflow occurring three times or more within the recent one hour, a checksum error occurring at 10% or more within the recent one hour, etc.

The outdoor unit 10 and a plurality of indoor units 20 may be set to as one group. The outdoor unit 10 and the plurality of indoor units 20 in the same group may exchange signals periodically or in response to occurrence of an event. In addition, the outdoor unit 10 and the plurality of indoor units 20 in the same group may be controlled as a group.

The outdoor unit 10 and the plurality of indoor units 20 may wirelessly communicate with each other using a sub-GHz frequency band.

In accordance with control by the controller 110, wireless communication modules 120 of the outdoor unit 10 and the plurality of indoor units 20 may wirelessly communicate with another unit using the sub-GHz frequency band.

A sub-GHz frequency band has excellent transmission and rotation characteristics, and thus is less attenuated in response to a wall or an inter-floor object. Thus, the wireless communication module 120 is efficient to be used for communication within an air conditioner system which is provided with a plurality of units in a building partitioned by walls.

Meanwhile, if another device using the same communication channel or an adjacent communication channel is additionally installed within a predetermined range from the position of the indoor unit 20 or if a data throughput of another device using the same communication channel or an adjacent communication channel is remarkably increased, an amount of data to be received by the indoor unit is increased.

If the amount of data is increased more than a predetermined level, the corresponding indoor unit 20 may not able to process received data and thus a buffer overflow may occur.

Thus, if a buffer overflow occurs a predetermined number of times or more within a predetermined period of time, the indoor unit 20 may determine that a reception rate degradation error has occurred.

In addition, if a checksum error occurs at a predetermined level or more within a predetermined period of time, the indoor unit 20 may determine that a reception rate degradation error has occurred.

Meanwhile, the indoor unit 20 receives a channel scan start command from the outdoor unit 10 belonging to the same group in S830.

The indoor units 20 performs a channel scan to check a use amount and communication load of each channel in S840.

Each of the indoor units 20 may perform a channel scan on a plurality of channels which is set in a predetermined range of frequencies in a sub-GHz band, in the similar manner as does the outdoor unit 10.

The indoor units 20 may reduce a channel scan time by checking an amount of communication load of a plurality of channels in an energy detection method.

The indoor units 20 may scan all set channels, and determine whether a corresponding channel is being used, depending on whether energy is detected in the corresponding channel during the scanning.

In some implementations, when energy equal to or greater than a predetermined value, the indoor units 20 may determine that a corresponding channel is being used.

Meanwhile, the indoor units 20 may scan all set channels repeatedly a predetermined number of times, and determine an amount of communication load based on energy detected through the repeated scanning.

In some implementations, the indoor units 20 may determine an amount of communication load based on the size of detected energy.

According to an embodiment of the present invention, a channel use amount may be determined, not by checking on the basis of each channel x each modulation method, but by checking on the basis of channel idleness, regardless of a type of wireless modulation method. For example, it is possible to measure communication load in an energy detection method for a predetermined period of time, regardless of a type of a modulation method, and to automatically set a communication module when a channel for use is determined.

In addition, according to an embodiment of the present invention, by performing a wirelessly channel scan on sub-GHz band wireless communication, it is possible to check an amount of communication load and use of each channel.

The indoor units 20 transmits channel scan results to the outdoor unit 10 in S850.

The outdoor unit 10 determines a channel for use of a corresponding group based on a result of a channel scan performed on its own and the channel scan results received from the plurality of indoor units 20.

In addition, the outdoor unit 10 outputs information on the determined channel for use to the plurality of indoor units 20. The information on the determined channel may include a command that instructs setting the determined channel as a communication channel.

The wireless communication module 120 of the outdoor unit 10 may broadcast a signal including the information on the determined channel a predetermined number of times, and the respective wireless communication modules 120 of the indoor units 20 may receive the broadcasted signal in S860.

The indoor units 20 may switch to a communication channel as the determined channel in S870.

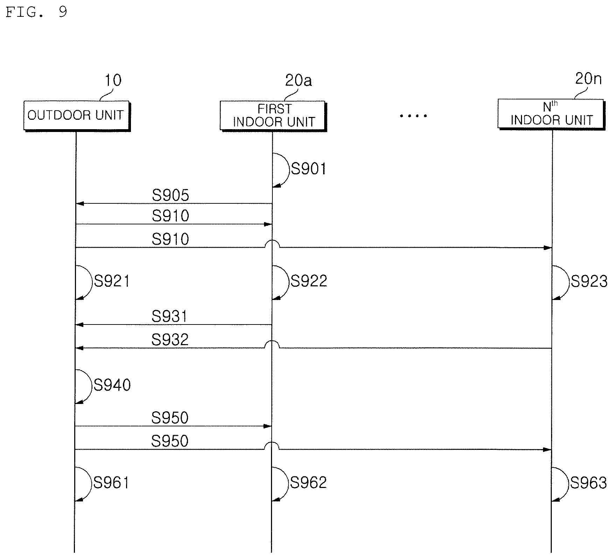

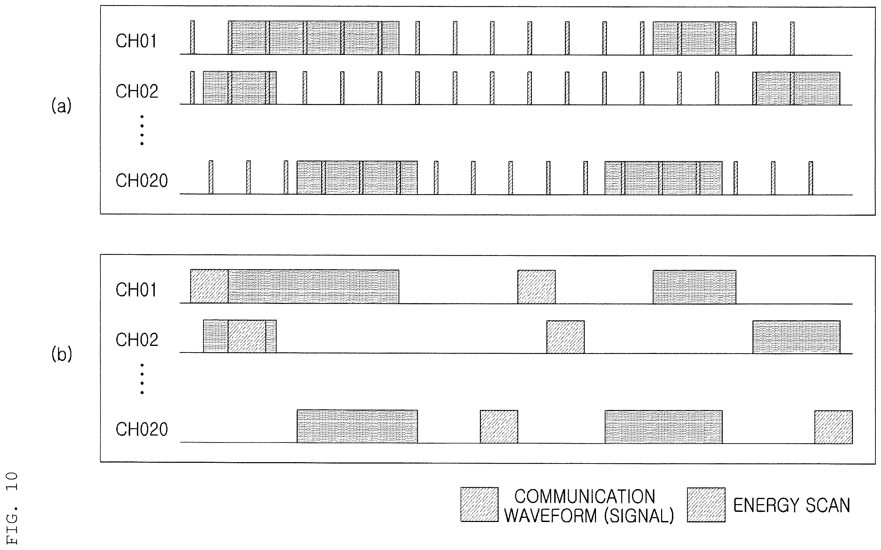

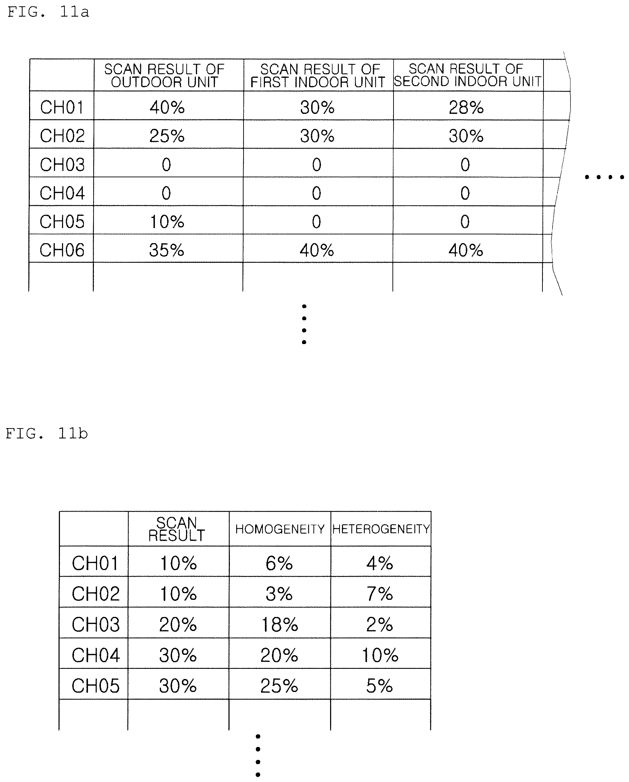

FIG.9 is a flowchart illustrating a control method of an air conditioner system according to an embodiment, and FIGS. 10, 11A, and 11B are diagram for explaining a control method of an air conditioner system according to an embodiment of the present invention.

Referring to FIG. 9, an outdoor unit 10 and a plurality of indoor units 20a to 20n may be set as one group, and the outdoor unit 10 and the plurality of indoor units 20a to 20n may wirelessly communicate with each other using a sub-GHz frequency band.

When a preset reception rate degradation error occurs in S901, one 20a of the plurality of indoor units 20a to 20n belonging to a particular group may transmit a channel switch request signal to the outdoor unit belonging to the same group in S905.

For example, the preset reception rate degradation error may include a buffer overflow occurring three times or more within the recent one hour, a checksum error occurring at 10% or more within the recent one hour, etc.

FIG. 9 shows an example in which the first indoor unit 20a transmits a channel switch request signal, but aspects of the present invention are not limited thereto.

For example, an error may occur in another indoor unit out of the plurality of indoor units 20a to 20n, and one or more indoor units with a reception rate degradation error occurred therein may transmit a channel switch request signal to the outdoor unit 10 in S905.

Meanwhile, for dynamic channel switch, the outdoor unit 10 may transmit a channel scan start command to the plurality of indoor units 20a to 20n belonging to the particular group in S910. In some implementations, the outdoor unit 10 may output the channel scan start command in a broadcast manner.

The outdoor unit 10 and the plurality of indoor units 20a to 20n may perform a channel scan individually in S921, S922, and S923.

The channel scan may be performed on a plurality of channels which is set in a predetermined range of frequencies in a sub-GHz band. For example, the channel scan may be performed on 20 channels which are preset in a sub-GHZ band.

Preferably, the outdoor unit 10 and the plurality of indoor units 20a to 20n may check an amount of communication load of a plurality of channels in an energy detection method, thereby reducing a channel scan time.

The outdoor unit 10 and the plurality of indoor units 20a to 20n may scan all the set channels individually, and, depending on whether energy is detected in a channel during the scanning, determine whether the corresponding channel is being used.

In some implementations, when energy equal to or greater than a predetermined value is detected in a channel, the outdoor unit 10 and the plurality of indoor units 20a to 20n may determine that the corresponding channel is being used.

As shown in (a) of FIG. 10, the outdoor unit 10 and the plurality of indoor units 20a to 20n may perform an energy scan to sequentially detect energy per channel.

In this case, the shorter one energy scan time is, the better it is. The energy scan may be performed on all the channels for a preset period of time. Accordingly, accuracy of the energy scan may be enhanced further.

As shown in (b) of FIG. 10, if one energy scan time for a predetermined channel is set long, the probability of detection failure of energy occurring in a communication signal of the corresponding channel is rather increased. Thus, repeatedly performing an energy scan for the predetermined channel in a predetermined cycle may help detect energy more accurately.

Thus, the outdoor unit 10 and the plurality of indoor units 20a to 20n may perform a scan on all set channels a predetermined number of times, and determine an amount of communication load based on energy detected through the repeated scanning.

In some implementations, the outdoor unit 10 and the plurality of indoor units 20a to 20n may determine an amount of communication load based on the size of detected energy.

According to an embodiment of the present invention, a channel use amount may be determined, not by checking on the basis of each channel x each modulation method, but by checking on the basis of channel idleness, regardless of a type of wireless modulation method. For example, it is possible to measure communication load in an energy detection method for a predetermined period of time, regardless of a type of a modulation method, and to automatically set a communication module when a channel for use is determined.

In addition, according to an embodiment of the present invention, by performing a wireless channel scan on wireless communication of a sub-GHz band, it is possible to check an amount of communication load and use of each channel.

The plurality of indoor units 20a to 20n may transmit channel scan results to the outdoor unit 10 in S931 and S932.

The outdoor unit 10 may determine a channel for use of the corresponding group based on a result of a channel scan performed on its own and the channel scan results received from the plurality of indoor units 20a to 20n in S940.

According to the present invention, a channel for use may be determined on the basis of results of channel scans individually performed by all units of a group and aggregated by the outdoor unit 10, not on the basis of a result of a channel scan performed by a predetermined device alone.

The outdoor unit 10 may analyze difference between communication channels at each location based on the aggregated channel scan results, and determine that a channel not being used or having the lowest amount of communication load is a channel for use.

The outdoor unit 10 may use the highest load occupancy rate of each channel in the channel scan results of the outdoor unit 10 and the plurality of indoor units 20a to 20n as a representative load occupancy rate of a corresponding channel. That is, for a use amount of each channel, the worst result in all results of each unit may be used as a representative value.

FIG. 11A shows an example of a channel scan result.

In the example of FIG. 11A, a representative value for CH01 may be set to 40% from among 40%, 30%, and 28%.

In the same manner, representative values for CH02, CH03, CH04, CH05, and CH06 may be 30%, 0%, 0%, 10%, and 40%, respectively.

Meanwhile, if there is only one channel having a load occupancy rate of 0%, the outdoor unit 10 may determine that the channel having the load occupancy rate of 0% is a channel for use.

If there is a plurality of channels having a load occupancy rate of 0%, the outdoor unit 10 may determine that a channel with an adjacent channel having the lowest load occupancy rate among the plurality of channels having the load occupancy rate of 0% is a channel for use.

Referring to the example of FIG. 11A, CH03 and CH04 has a load occupancy rate of 0%. The outdoor unit 10 may determine one of CH03 and CH04 to be a channel for use.

CH02 and CH04, which are adjacent channels of Channel 3, have a load occupancy rate of 25% and a load occupancy rate of 0%, respectively. CH03 and CH05, which are adjacent channels of CH04, have a load occupancy rate of 0% and a load occupancy rate of 10%, respectively.

Thus, by selecting CH04 whose adjacent channels have a lower load occupancy rate, the outdoor unit 10 may reduce interference between adjacent channels.

In addition, if there is a plurality of channels having a load occupancy rate of 0%, the outdoor unit 10 determines that a channel with the greatest difference in a load occupancy rate with an adjacent channel from among the plurality of channels having the load occupancy rate of 0% is a channel for use. Even in this case, CH04 may be selected in the example of FIG. 11A.

Alternatively, if there are two or more channels having a load occupancy rate of 0%, a channel having the maximum sum of square of difference between the channel and each of two adjacent channels whose load occupancy rate is greater than 0% may be selected.

Meanwhile, there is no channel having a load occupancy rate of 0%, the outdoor unit 10 may determine that a channel having the lowest load occupancy rate is a channel for use. That is, a channel currently having the lowest amount of communication load may be used. Meanwhile, if there are two or more channels equally having a low load occupancy rate, one of the two or more channels may be selected.

FIG. 11B is an example of a channel scan result, showing examples of a representative value of each channel, a homogeneity occupancy rate, and a heterogeneity occupancy rate. The homogeneity occupancy rate indicates a load occupancy rate by units included in the air conditioner system, and a heterogeneity occupancy rate is a load occupancy rate by other electronic devices not included in the air conditioner system.

Referring to the example of FIG. 11B, the outdoor unit 10 may determine that CH01 or CH02 having the lowest load occupancy rate is a channel for use.

Communication load between units included in the air conditioner system may be easy to expect and manage, compared to other external wireless communication (a heterogeneous network).

Thus, if there is no channel having a load occupancy rate of 0%, a channel having the lowest load occupancy rate by a heterogeneous network may be determined to be a channel for use.

If there is no channel having a load occupancy rate of 0%, the outdoor unit 10 may determine that a channel having the lowest load occupancy rate due to other device not included in the air conditioner system is a channel for use.

Referring to the example of FIG. 11B, the outdoor unit 10 may determine that CH01 having a higher homogeneity occupancy rate and a lower heterogeneity occupancy rate among CH 01 and CH02 is a channel for use.

Meanwhile, even when there is no channel having a load occupancy rate of 0%, the outdoor unit 10 may determine that a channel with an adjacent channel having the lowest load occupancy rate is a channel for use.

If there is a plurality of channels with an adjacent channel having the lowest load occupancy rate, the outdoor unit 10 may determine that a channel having the greatest absolute value of signal strength is a channel for use.

In addition, even when there is no channel having a load occupancy rate of 0%, the outdoor unit 10 may determine that a channel with the greatest difference in a load occupancy rate with an adjacent channel is a channel for use.

Meanwhile, the outdoor unit 10 may output information on the determined channel to the plurality of indoor units 20a to 20n in S950.

The information on the determined communication channel may include a command that instructs setting the determined channel as a communication channel.

The wireless communication module 120 of the outdoor unit 10 may broadcast a signal including the information on the determined channel a predetermined number of times, and the wireless communication module 120 of each of the plurality of indoor units 20a to 20n may receive the broadcasted signal.

Meanwhile, the outdoor unit 10 and the plurality of indoor units 20a to 20n may switch to the determined channel as a communication channel in S961, S962, and S963.

In a building, an apartment, and any case where many products are wirelessly connected, the present invention determine an available frequency band from among limited frequency resources and automatically determine an optimal frequency without a user's setting.

In addition, when attempting to change a channel, an installer, an engineer, a SVC man, a user, or the like is able to check the optimal communication channel and manually change a channel.

Accordingly, equipment such as an additional spectrum analyzer is not necessary, and the most comfortable channel environment may be confirmed with low costs.

In the use of wireless communication, a communication success rate may be reduced to a predetermined level or lower due to interfering signals or increased loads in the environment of a channel in use according to change in a surrounding environment.

According to the present invention, when the quality of communication is degraded to a predetermined level or more, it is possible to scan again a wireless communication environment and switch to a wireless channel having no interfering frequency and a small usage amount.

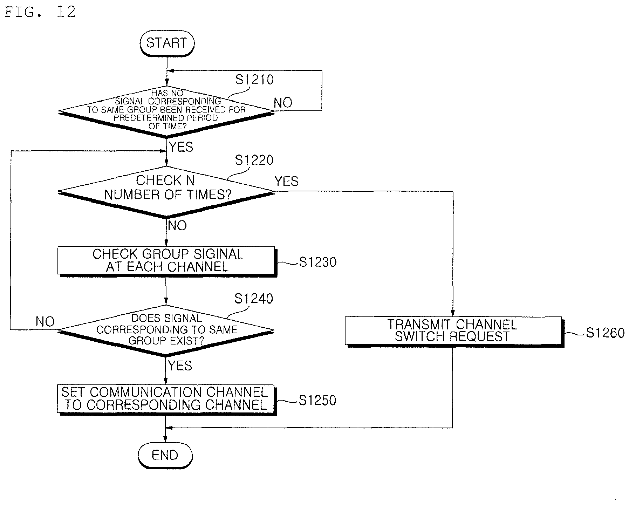

FIG. 12 is a flowchart illustrating a control method of an air conditioner system according to an embodiment of the present invention.

Referring to FIG. 12, if a No Reception event, which indicates that one of a plurality of indoor units belonging to a particular group has received no signal within a predetermined period of time, occurs in S1210, a corresponding indoor unit where the No Reception event has occurred checks a signal corresponding to the particular group at each channel in S1230.

For example, the No Reception event may indicate the case where information on an outdoor unit has not been received for three minutes.

The corresponding indoor unit may check signals transmitted by units belonging to the same group. If there are signals transmitted by the units belonging to the same group in S1240, the corresponding indoor unit may set a communication channel in accordance with the signals in S1250.

Take an example where the current communication channel is a first channel. If a signal corresponding to the particular group at the first channel in use is checked in S940, it does not mean occurrence of a problem with the communication channel, and thus, the indoor unit may maintain the first channel in S1250.

That is, if there is a communication signal from another indoor unit at the same channel, it does not mean a channel problem, and thus, a channel is not switched.

If a signal corresponding to the particular group is found at a second channel other than the first channel in use in S1240, the indoor unit switches a communication channel to the second channel in S1250.

When an outdoor unit and a plurality of indoor units, belonging to the same group, switches a communication channel, some indoor units may fail to switch the communication channel due to a power-off state or temporary malfunction.

In this case, if a corresponding indoor unit is powered on or the malfunction is solved, the corresponding indoor unit may search for a communication channel again, identify group ID of the corresponding group from received signals, and switch to a corresponding channel.

On the other hand, if a signal corresponding to the particular group is not found in S1240, the corresponding indoor unit may check whether a signal transmitted by the units belonging to the same group exists at each channel in S930.

The corresponding indoor unit may repeatedly check a group signal at each channel in S1230. If the number of times of checking reaches a predetermined number N while no signal from a unit belonging to the same group has been sensed in S1220, the corresponding indoor unit transmits a channel switch request signal to the outdoor unit belonging to the particular group in S1260.

That is, if a signal from a unit belonging to the same group is sensed, the corresponding indoor unit may switch to a corresponding channel: if not, the indoor unit has no means to communicate with another indoor unit belonging to the same group.

Thus the corresponding indoor unit may request the outdoor unit to switch a communication channel of the whole group, and the outdoor unit and the plurality of indoor units belonging to the group may dynamically switch a communication channel in a manner described above with reference to FIG. 9.

According to at least one embodiment of the present invention, it is possible to switch to a good communication channel according to change in a communication environment.

In addition, according to at least one embodiment of the present invention, it is possible to set an optimal communication channel.

In addition, according to at least one embodiment of the present invention, it is possible to create a high-quality wireless communication environment.

In addition, according to at least one embodiment of the present invention, it is possible to provide an air conditioner system, which allows units to wirelessly communicate directly with each other regardless of an installation environment, and a control method of the system.

An electronic device (unit), a mobile terminal, and an air conditioner system according to the present invention are not limitedly applicable to the configurations and methods of the embodiments as described above. For example, all or some of the embodiments may be selectively combined to achieve various modifications as long as within the scope of the claims

Meanwhile, certain aspects of the present invention may be implemented as code that can be written on a computer-readable medium in which a program is recorded and thus read by a computer, as long as within the scope of the claims. The computer-readable medium includes all kinds of recording devices in which data is stored in a computer-readable manner. Examples of the computer-readable recording medium may include a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). Furthermore, the recording medium readable by a processor may be distributed over computer systems connected over a network, and the code readable by a processor may be stored and executed in a distributed manner.

## Claims

1. A control method of an air conditioner system which comprises one or more groups each comprising an outdoor unit (10) and a plurality of indoor units (20), the method comprising:
when a preset reception rate degradation error occurs (S810) in one or more indoor units (20) among a plurality of indoor units (20) belonging to a particular group, transmitting (S820) a channel switch request signal to an outdoor unit (10) belonging to the particular group;
transmitting (S830), by the outdoor unit (10) belonging to the particular group, a channel scan start command to the plurality of indoor units (20) belonging to the particular group;
performing (S840) a channel scan by each of the outdoor unit (10) and the plurality of indoor units (20);
transmitting (S850), by the plurality of indoor units (20), channel scan results to the outdoor unit (10);
determining, by the outdoor unit (10), a channel for use of the particular group based on a result of a channel scan performed by the outdoor unit (10) and the channel scan results received (S860) from the plurality of indoor units (20); and
outputting, by the outdoor unit (10), information on the determined channel to the plurality of indoor units (20);
wherein the determining of a channel for use comprises, when there is a plurality of channels having a load occupancy rate of 0%, determining that a channel with a greatest difference in a load occupancy rate from an adjacent channel among the plurality of channels having the load occupancy rate of 0% is the channel for use,
wherein when a No Reception event, which indicates that no signal has been received for a predetermined period of time, occurs in one of the plurality of indoor units belonging to the particular group, checking, by an indoor unit where the No Reception event has occurred, a signal corresponding to the particular group,
when a signal corresponding to the particular group is found in a second channel other than a first channel which is currently in use, switching a communication channel to the second channel,
when a signal corresponding to the particular group is not found, transmitting the channel switch request signal to the outdoor unit belonging to the particular group.

2. The control method of claim 1, wherein the outdoor unit (10) and the plurality of indoor units (20) belonging to the particular group perform wireless communication using a sub-GHZ frequency band.

3. The control method of claim 1, or 2, wherein the performing of a channel scan comprises checking, by each of the scan outdoor unit and the plurality of indoor units, an amount of channel load of a plurality of channels in an energy detection method.

4. The control method of claim 1, 2, or 3, wherein the determining of a channel for use comprises, when there is only one channel having a load occupancy rate of 0%, determining that the channel having the load occupancy rate of 0% is the channel for use.

5. The control method of any one of claims 1 to 4,
wherein the transmitting, by the outdoor unit, of information on the determined channel to the plurality of indoor units comprises broadcasting, by the outdoor unit, the information on the determined channel to the plurality of indoor unit a predetermined number of times.

6. The control method of any one of claims 1 to 5, wherein the determining of a channel for use comprises, when there is no channel having a load occupancy rate of 0%, determining that a channel having a lowest load occupancy rate is the channel for use.

7. The control method of any one of claims 1 to 5, wherein the determining of a channel for use comprises, when there is no channel having a load occupancy rate of 0%, determining that a channel having a lowest load occupancy rate due to other device not included in the air conditioner system is the channel for use.

8. The control method of any one of claims 1 to 5, wherein the determining of a channel for use comprises, when there is no channel having a load occupancy rate of 0%, determining that a channel with an adjacent channel having a lowest load occupancy rate is the channel for use,
wherein, when there is a plurality of channels with respective adjacent channels having a lowest load occupancy rate, it is determined that a channel having a greatest absolute value of signal strength is the channel for use.

9. The control method of any one of claims 1 to 8, wherein the determining of a channel for use comprises using a highest load occupancy rate of each channel in channel scan results of the outdoor unit and the plurality of indoor units as a representative load occupancy rate of a corresponding channel.

10. The control method of any one of claims 1 to 9, further comprising switching, by the outdoor unit and the plurality of indoor units belonging to the particular group, a communication channel to the channel for use.

## Patentansprüche

1. Steuerverfahren eines Klimaanlagensystems, das eine oder mehrere Gruppen umfasst, die jeweils eine Außeneinheit (10) und eine Vielzahl von Inneneinheiten (20) umfassen, wobei das Verfahren Folgendes umfasst:
wenn ein voreingestellter Empfangsratenabfallfehler (S810) in einer oder mehreren Inneneinheiten (20) unter einer Vielzahl von zu einer bestimmten Gruppe gehörenden Inneneinheiten (20) auftritt, Übertragen (S820) eines Kanalwechselsignals an eine zu der bestimmten Gruppe gehörende Außeneinheit (10);
Übertragen (S830), durch die zu der bestimmten Gruppe gehörenden Außeneinheit (10), eines Kanalsuchlauf-Startbefehls an die Vielzahl von zu der bestimmten Gruppe gehörenden Inneneinheiten (20);
Ausführen (S840) eines Kanalsuchlauf durch jede von der Außeneinheit (10) und der Vielzahl von Inneneinheiten (20);
Übertragen (S850), durch die Vielzahl von Inneneinheiten (20), von Kanalsuchlaufresultaten an die Außeneinheit (10);
Bestimmen, durch die Außeneinheit (10), eines zu verwendenden Kanals der bestimmten Gruppe basierend auf einem Resultat des durch die Außeneinheit (10) ausgeführten Kanalsuchlaufs und den von der Vielzahl von Inneneinheiten (20) her empfangenen (S860) Kanalsuchlaufresultaten; und
Ausgeben, durch die Außeneinheit (10), von Informationen über den bestimmten Kanal an die Vielzahl von Inneneinheiten (20);
wobei das Bestimmen eines zu verwendenden Kanals Folgendes umfasst: wenn eine Vielzahl von Kanälen mit einer Auslastungsrate von 0 % vorliegt, Bestimmen, dass ein Kanal mit einer größten Differenz einer Auslastungsrate gegenüber einem benachbarten Kanal unter der Vielzahl von Kanälen mit der Auslastungsrate von 0 % der zu verwendende Kanal ist,
wobei, wenn ein Kein-Empfang-Ereignis, das angibt, dass für einen vorgegebenen Zeitraum kein Signal empfangen wurde, in einer der Vielzahl von zu der bestimmten Gruppe gehörenden Inneneinheiten auftritt, Prüfen, durch eine Inneneinheit, in der das Kein-Empfang-Ereignis aufgetreten ist, eines der bestimmten Gruppe entsprechenden Signals,
wenn ein der bestimmten Gruppe entsprechendes Signal in einem von einem ersten Kanal, der gegenwärtig in Gebrauch ist, verschiedenen zweiten Kanal gefunden wird, Wechseln eines Kommunikationskanals zu dem zweiten Kanal,
wenn kein der bestimmten Gruppe entsprechendes Signal gefunden wird, Übertragen des Kanalwechselanforderungssignals an die zu der bestimmten Gruppe gehörenden Außeneinheit.

2. Steuerverfahren nach Anspruch 1, wobei die Außeneinheit (10) und die Vielzahl von zu der bestimmten Gruppe gehörenden Inneneinheiten (20) Drahtloskommunikation unter Verwendung eines Sub-GHz-Frequenzbands ausführen.

3. Steuerverfahren nach Anspruch 1 oder 2, wobei das Ausführen eines Kanalsuchlaufs das Prüfen, durch jede von der Suchlauf-Außeneinheit und der Vielzahl von Inneneinheiten, eines Betrags der Kanallast einer Vielzahl von Kanälen in einem Energiedetektionsverfahren umfasst.

4. Steuerverfahren nach Anspruch 1, 2 oder 3, wobei das Bestimmen eines zu verwendenden Kanals Folgendes umfasst: wenn nur ein Kanal mit einer Auslastungsrate von 0 % vorliegt, Bestimmen, dass der Kanal mit der Auslastungsrate von 0 % der zu verwendende Kanal ist.

5. Steuerverfahren nach einem der Ansprüche 1 bis 4,
wobei das Übertragen, durch die Außeneinheit, von Informationen über den bestimmten Kanal an die Vielzahl von Inneneinheiten das Aussenden, durch die Außeneinheit, der Informationen über den bestimmten Kanal an die Vielzahl von Inneneinheit eine vorgegebene Anzahl von Malen umfasst.

6. Steuerverfahren nach einem der Ansprüche 1 bis 5, wobei das Bestimmen eines zu verwendenden Kanals Folgendes umfasst: wenn kein Kanal mit einer Auslastungsrate von 0 % vorhanden ist, Bestimmen, dass ein Kanal mit einer niedrigsten Auslastungsrate der zu verwendende Kanal ist.

7. Steuerverfahren nach einem der Ansprüche 1 bis 5, wobei das Bestimmen eines zu verwendenden Kanals Folgendes umfasst: wenn kein Kanal mit einer Auslastungsrate von 0 % vorhanden ist, Bestimmen, dass ein Kanal mit einer niedrigsten Auslastungsrate infolge eines nicht in dem Klimaanlagensystem enthaltenen anderen Geräts der zu verwendende Kanal ist.

8. Steuerverfahren nach einem der Ansprüche 1 bis 5, wobei das Bestimmen eines zu verwendenden Kanals Folgendes umfasst: wenn kein Kanal mit einer Auslastungsrate von 0 % vorhanden, Bestimmen, dass ein Kanal mit einem benachbarten Kanal mit einer niedrigsten Auslastungsrate der zu verwendende Kanal ist.
wobei, wenn eine Vielzahl von Kanälen mit jeweiligen benachbarten Kanälen mit einer niedrigsten Auslastungsrate vorhanden ist, bestimmt wird, dass ein Kanal mit einem größten Absolutwert der Signalstärke der zu verwendende Kanal ist.

9. Steuerverfahren nach einem der Ansprüche 1 bis 8, wobei das Bestimmen eines zu verwendenden Kanals das Verwenden einer höchsten Auslastungsrate jedes Kanals in Kanalsuchlaufresultaten der Außeneinheit und der Vielzahl von Inneneinheiten als repräsentative Auslastungsrate eines entsprechenden Kanals umfasst.

10. Steuerverfahren nach einem der Ansprüche 1 bis 9, ferner umfassend das Wechseln, durch die Außeneinheit und die Vielzahl von Inneneinheiten, die zu der bestimmten Gruppe gehören, eines Kommunikationskanals zu dem zu verwendenden Kanal.

## Revendications

1. Procédé de commande d'un système de climatisation, qui comprend un ou plusieurs groupes comprenant chacun une unité extérieure (10) et une pluralité d'unités intérieures (20), le procédé comprenant :
lorsque se produit une erreur de dégradation de taux de réception préétablie (E810) dans une ou plusieurs unités intérieures (20) parmi une pluralité d'unités intérieures (20) appartenant à un groupe particulier, la transmission (E820) d'un signal de demande de commutation de canal à une unité extérieure (10) appartenant au groupe particulier ;
la transmission (E830), par l'unité extérieure (10) appartenant au groupe particulier, d'une commande de début de balayage de canal à la pluralité d'unités intérieures (20) appartenant au groupe particulier ;
la réalisation (E840) d'un balayage de canal par chacune de l'unité extérieure (10) et de la pluralité d'unités intérieures (20) ;
la transmission (E850), par la pluralité d'unités intérieures (20), de résultats de balayage de canal à l'unité extérieure (10) ;
la détermination, par l'unité extérieure (10), d'un canal pour l'utilisation du groupe particulier sur la base d'un résultat d'un balayage de canal réalisé par l'unité extérieure (10) et de résultats de balayage de canal reçus (E860) de la pluralité d'unités intérieures (20) ; et
la délivrance en sortie, par l'unité extérieure (10), d'informations sur le canal déterminé à la pluralité d'unités intérieures (20) ;
dans lequel la détermination d'un canal à utiliser comprend, lorsqu'il existe une pluralité de canaux présentant un taux d'occupation de charge de 0 %, la détermination qu'un canal avec un canal adjacent avec une différence la plus importante dans un taux d'occupation de charge par rapport à un canal adjacent parmi la pluralité de canaux présentant le taux d'occupation de charge de 0 % est le canal à utiliser,
dans lequel lorsqu'un événement de non-réception, qui indique qu'aucun signal n'a été reçu pendant une période de temps prédéterminée, se produit dans l'une de la pluralité d'unités intérieures appartenant au groupe particulier, la vérification, par une unité intérieure où l'événement de non-réception s'est produit, d'un signal correspondant au groupe particulier,
lorsqu'un signal correspondant au groupe particulier est trouvé dans un deuxième canal autre qu'un premier canal qui est actuellement en utilisation, la commutation d'un canal de communication sur le deuxième canal,
lorsqu'un signal correspondant au groupe particulier n'est pas trouvé, la transmission du signal de demande de commutation de canal à l'unité extérieure appartenant au groupe particulier.

2. Procédé de commande selon la revendication 1, dans lequel l'unité extérieure (10) et la pluralité d'unités intérieures (20) appartenant au groupe particulier effectuent une communication sans fil en utilisant une bande de fréquences inférieure au GHz.

3. Procédé de commande selon la revendication 1 ou 2, dans lequel la réalisation d'un balayage de canal comprend la vérification, par chacune de l'unité extérieure de balayage et de la pluralité d'unités intérieures, d'une quantité de charge de canal d'une pluralité de canaux dans un procédé de détection d'énergie.

4. Procédé de commande selon la revendication 1, 2 ou 3, dans lequel la détermination d'un canal à utiliser comprend, lorsqu'il y a un seul canal présentant un taux d'occupation de charge de 0 %, la détermination que le canal présentant le taux d'occupation de charge de 0 % est le canal à utiliser.

5. Procédé de commande selon l'une quelconque des revendications 1 à 4,
dans lequel la transmission, par l'unité extérieure, d'informations sur le canal déterminé à la pluralité d'unités intérieures comprend la diffusion, par l'unité extérieure, des informations sur le canal déterminé à la pluralité d'unités intérieures un nombre prédéterminé de fois.

6. Procédé de commande selon l'une quelconque des revendications 1 à 5,
dans lequel la détermination d'un canal à utiliser comprend, lorsqu'il n'y a aucun canal présentant un taux d'occupation de charge de 0 %,
la détermination qu'un canal présentant un taux d'occupation de charge le plus faible est le canal à utiliser.

7. Procédé de commande selon l'une quelconque des revendications 1 à 5,
dans lequel la détermination d'un canal à utiliser comprend, lorsqu'il n'y a pas de canal présentant un taux d'occupation de charge de 0 %, la détermination qu'un canal présentant un taux d'occupation de charge le plus faible dû à un autre dispositif non inclus dans le système de climatisation est le canal à utiliser.

8. Procédé de commande selon l'une quelconque des revendications 1 à 5, dans lequel la détermination d'un canal à utiliser comprend, lorsqu'il n'y a pas de canal présentant un taux d'occupation de charge de 0 %, la détermination qu'un canal avec un canal adjacent présentant un taux d'occupation de charge le plus faible est le canal à utiliser,
dans lequel, lorsqu'il y a une pluralité de canaux avec des canaux adjacents respectifs présentant un taux d'occupation de charge le plus faible, il est déterminé qu'un canal présentant une valeur absolue la plus grande de force de signal est le canal à utiliser.

9. Procédé de commande selon l'une quelconque des revendications 1 à 8, dans lequel la détermination d'un canal à utiliser comprend l'utilisation d'un taux d'occupation de charge le plus élevé de chaque canal dans des résultats de balayage de canal de l'unité extérieure et de la pluralité d'unités intérieures comme taux d'occupation de charge représentatif d'un canal correspondant.

10. Procédé de commande selon l'une quelconque des revendications 1 à 9, comprenant en outre la commutation, par l'unité extérieure et la pluralité d'unités intérieures appartenant au groupe particulier, d'un canal de communication sur le canal à utiliser.
